# EUROPÄISCHE PATENTANMELDUNG

(11) **EP 4 442 978 A1**
(43) Veröffentlichungstag der Anmeldung: **09.10.2024**
(21) Anmeldenummer: 24164923.5
(22) Anmeldetag: 20.03.2024
(51) Int. Cl.: F02C 3/30, F02C 6/18, F02K 3/06, F28D 7/00, F28D 7/08

(54) **STRÖMUNGSMASCHINE FÜR EINEN FLUGANTRIEB**

(30) Priorität: 24.03.2023 DE 102023107536; 30.06.2023 DE 102023117412
(71) Anmelder: MTU Aero Engines AG, 80995 München (DE)
(72) Erfinder: Bolgar, Istvan, 80995 München (DE); Fois, Milena, 80995 München (DE); Cottier, Francois, 80995 München (DE)

(57) **Zusammenfassung**

Die Erfindung betrifft eine Strömungsmaschine (1) für einen Flugantrieb mit einem von einer Gasströmung (6) in einer Strömungsrichtung (R) der Strömungsmaschine (1) durchströmten Verdichter (3), Brennraum (4), Turbine (5) und einem der Turbine (5) nachgelagerten Wärmetauscher (8), wobei der Wärmetauscher (8) eingerichtet ist, aus einem Wasser (W) mittels einer Energie der Gasströmung (6) einen Wasserdampf zu erzeugen, welcher der Gasströmung (6) zum Verbrennen im Brennraum (4) mit Brennstoff zuführbar ist.

## Beschreibung

Die Erfindung betrifft eine Strömungsmaschine für einen Flugantrieb mit einem von einer Gasströmung in einer Strömungsrichtung der Strömungsmaschine durchströmten Verdichter, Brennraum, Turbine und einem der Turbine nachgelagerten Wärmetauscher, wobei der Wärmetauscher eingerichtet ist, aus einem Wasser mittels einer Energie der Gasströmung einen Wasserdampf zu erzeugen, welcher der Gasströmung zum Verbrennen im Brennraum mit Brennstoff zuführbar ist.

Um die Umweltwirkung des Flugverkehrs zu verbessern, bestehen Bestrebungen bei Flugantrieben das Medium Wasser bzw. Wasserdampf bei stationären Strömungsmaschinen zur Leistungssteigerung und zur Emissionssenkung zu nutzen. Beispielsweise setzt die "Water-Enhanced Turbofan (WET)"-Technologie auf eine Wassereinspritzung in eine Brennkammer. Hierbei kann in einem stromabwärts einer Triebwerksturbine angeordneten Wärmetauscher bzw. Dampferzeuger mittels Abgasenergie Wasserdampf erzeugt werden, der im Bereich der Brennkammer zugeführt wird. Nach einem Durchströmen des Dampferzeugers kann feuchtes Abgas weitere Komponenten durchströmen, die dazu dienen, Wasser aus dem Abgas abzuscheiden und dieses Wasser zur Dampferzeugung bereitzustellen bzw. zu verwenden. Für diese WET-Konzepte sind eine effiziente Rückgewinnung des im Abgas vorhandenen Wassers und eine Nutzung der in der Strömungsmaschine vorhandenen Energie zur Erzeugung von Wasserdampf aus dem rückgewonnenen Wasser Grundvoraussetzungen. Bei der Integration eines Wärmetauschers stromabwärts der Turbine einer Strömungsmaschine ist das Erreichen einer homogenen Strömungsverteilung des Abgasstroms schwierig, insbesondere bei einer Umlenkung der Abgasströmung aus der Hauptströmungsrichtung. Weist ein Wärmetauscher mehrere parallel angeordnete Strömungskanäle auf, besteht die Gefahr, dass abhängig von der Ausrichtung der Strömungskanäle aufgrund einer inhomogenen Wärmeverteilung in der Gasströmung unterschiedliche Wärmemengen übertragen werden, infolge welcher sich eine aerothermale Asymmetrie ergeben kann. Neben einem Leistungsverlust können hierdurch auch Instabilitäten im Verdampfungsprozess des Verdampfers ausgelöst werden. Eine Herausforderung hierbei ist folglich, den Abgasstrom dem Wärmetauscher bzw. Verdampfer derart bereitzustellen, dass eine ausgeglichene Wärmeübertragung stattfinden und eine aerothermale Asymmetrie vermieden werden kann.

Hiervon ausgehend ist es eine Aufgabe der vorliegenden Erfindung, eine verbesserte Strömungsmaschine für einen Flugantrieb vorzuschlagen, bei welcher insbesondere eine Wasserdampferzeugung und/ oder ein Wirkungsgrad verbessert werden soll. Dies wird erfindungsgemäß durch die Lehre des unabhängigen Anspruchs erreicht. Vorteilhafte Ausführungen der Erfindung sind Gegenstand der Unteransprüche.

Zur Lösung der Aufgabe wird eine Strömungsmaschine für einen Flugantrieb mit einem von einer Gasströmung in einer Strömungsrichtung der Strömungsmaschine durchströmten Verdichter, Brennraum, Turbine und einem der Turbine nachgelagerten Wärmetauscher vorgeschlagen, wobei der Wärmetauscher eingerichtet ist, aus einem Wasser mittels einer Energie der Gasströmung einen Wasserdampf zu erzeugen, welcher der Gasströmung zum Verbrennen im Brennraum mit Brennstoff zuführbar ist. Der Wärmetauscher weist dabei wenigstens zwei sich im Wesentlichen in wenigstens einer Übertragungsebene erstreckende Strömungskanäle auf, die von dem Wasser im Wesentlichen parallel zu der Strömungsrichtung der Strömungsmaschine durchströmbar sind, wobei jeder Strömungskanal in der wenigstens einen Übertragungsebene in der Strömungsrichtung der Strömungsmaschine äquidistant zur Turbine angeordnet ist.

Im Sinne der vorliegenden Offenbarung stellt eine Übertragungsebene eine insbesondere in Strömungsrichtung der Strömungsmaschine ausgerichtete Ebene dar, in welcher wenigstens zwei Strömungskanäle bzw. Abschnitte eines Strömungskanals verlaufen. Abhängig von der Bauform des Wärmetauschers und insbesondere der Strömungsführung im Wärmetauscher kann die Übertragungsebene abweichend von einer üblicherweise planaren Form auch eine andere insbesondere geometrische Form wie beispielsweise eine Zylindermantelform aufweisen - insbesondere derart, dass in der Übertragungsebene sich erstreckende Strömungskanäle im Strömungsverlauf der Gasströmung etwa gleich angeordnet sind bzw. nach etwa dem gleichen Strömungsweg von der Gasströmung überstrichen werden. Aufgrund des üblicherweise symmetrischen Aufbaus eines Wärmetauschers bzw. der Anordnung der Strömungskanäle strömt das Wasser auf parallelen Wegen durch die wenigstens zwei Strömungskanäle einer Übertragungsebene, so dass das in den Strömungskanälen strömende Wasser an der gleichen, in der Übertragungsebene benachbarten Position, üblicherweise die gleiche Temperatur aufweist.

Äquidistant bedeutet im Sinne der vorliegenden Offenbarung insbesondere, dass ein der Turbine nächstgelegener Punkt jedes Strömungskanals in einer Übertragungsebene und damit das in verschiedenen Kanälen jeweils parallel durch den Wärmetauscher strömende Wasser den gleichen Abstand zur Turbine aufweist bzw. auf derselben Axialposition relativ zur Turbine bzw. zur Strömungsmaschine angeordnet ist.

Dadurch, dass jeder Strömungskanal einer Übertragungsebene den gleichen Abstand zur Turbine aufweist, erreicht die aus der Turbine strömende Gasströmung jeden Strömungskanal und das darin strömende Wasser im Wesentlichen gleichzeitig, wodurch eine homogene Wärmeübertragung von der Gasströmung auf die Strömungskanäle und das darin strömende Wasser erfolgen kann. Insbesondere kann dadurch auch eine homogen verteilte Wärmeübertragung über eine Längserstreckung der Strömungskanäle bzw. über einen Strömungsverlauf des Wassers in jedem Strömungskanal erfolgen, um eine aerothermale Asymmetrie im Wärmetauscher zu vermeiden

Eine Strömungsmaschine für einen Flugantrieb weist einen Verdichter, einen Brennraum und eine Turbine auf. Während des Betriebs der Strömungsmaschine wird Luft in einem Verdichter komprimiert, in dem Brennraum mit Brennstoff vermischt und gezündet, um eine Turbine anzutreiben. Ferner kann die Strömungsmaschine ein Brennstoffaufbereitungssystem zum Aufbereiten des Brennstoffs vor dessen Verbrennung im Brennraum aufweisen, welche insbesondere den im Wärmetauscher erzeugten Wasserdampf verwenden kann. Die vorgeschlagene Strömungsmaschine weist zudem einen stromabwärts der Turbine angeordneten Wärmetauscher auf, in welchem aus, insbesondere der Gasströmung bzw. dem Abgas der Strömungsmaschine entzogenem und dem Wärmetauscher bereitgestelltem Wasser mithilfe der Energie der Gasströmung Wasserdampf erzeugt wird.

Ein Flugantrieb kann eine solche, insbesondere axiale Strömungsmaschine aufweisen, wobei die Strömungsmaschine eine Abgasbehandlungseinrichtung aufweisen kann, die der Turbine der Strömungsmaschine insbesondere nachgelagert angeordnet ist. Die Abgasbehandlungseinrichtung kann einen Wärmetauscher, eine Kühleinrichtung und eine Wasserabscheideeinrichtung umfassen, welche in Strömungsrichtung der Strömungsmaschine wenigstens teilweise an einem Abgaskanal der Abgasbehandlungseinrichtung angeordnet sein können bzw. kann die Gasströmung den Wärmetauscher, die Kühleinrichtung und die Wasserabscheideeinrichtung nacheinander durchströmen. Die Gasströmung nach der Turbine bzw. ein Abgas des Flugtriebwerks bzw. der Turbine kann mittels des Wärmetauschers auf eine Temperatur unterhalb der Temperatur beim Austreten aus der Turbine bzw. einer ursprünglichen Abgastemperatur abgekühlt werden. Hierbei wird der Gasströmung mittels des Wärmetauschers Energie entzogen, welche zum Erzeugen von Wasserdampf genutzt wird, wodurch die Temperatur der Gasströmung sinkt.

Die dem Wärmetauscher in Strömungsrichtung nachgelagerte Kühleinrichtung kann dabei als Kondensator (Kondensatorwärmetauscher) ausgebildet sein oder einen solchen aufweisen und Umgebungsluft als Kühlfluid nutzen, welche beispielsweise mittels eines Gebläses oder eines Fans der Strömungsmaschine gefördert wird. Dieser Kondensatorwärmetauscher kann im Wesentlichen zwei Bereiche aufweisen, wobei in einem stromaufwärts angeordneten ersten Bereich eine Abkühlung der im Wesentlichen gasförmigen Abgasströmung stattfindet. In einem dem ersten Bereich nachgelagerten zweiten Bereich wird die Abgasströmung (noch) weiter abgekühlt, sodass flüssige Wasseranteile in der Abgasströmung vorliegen, welche aus der Abgasströmung abgeschieden werden können. Der flüssige Wasseranteil kann in der Wasserabscheideeinrichtung von der Gasströmung getrennt werden und dem Wärmetauscher zur Dampferzeugung bereitgestellt werden. So kann das rückgewonnene Wasser in einen Betriebsprozess der Strömungsmaschine zurückgeführt werden.

Die Erfindung beruht unter anderem auf der Idee, eine Strömungskanal- bzw. Stoffströmungsführung im Wärmetauscher derart zu gestalten, dass sich für jeden, sich in einer gleichen Übertragungsebene und damit in einem gleichen Bereich des Wärmetauschers erstreckenden, das Wasser führenden Strömungskanal eine Ausrichtung bzw. Anordnung ergibt, die eine vergleichbare bzw. im Wesentlichen gegenüber dem Gasaustritt an der Turbine gleichartig angeordnete Anströmung jedes Strömungskanals in einer Wärmetauscher- bzw. Rohrbündelebene ermöglicht. Hierzu wird vorgeschlagen, jeden in einer gleichen Übertragungsebene - und damit in einem gleichen Temperaturbereich des Wärmetauschers angeordneten Strömungskanal derart relativ zu der Turbine und somit zu der Gasströmung zu positionieren, dass jeder Strömungskanal in Richtung der Strömungsmaschinenachse dem gleichen Abstand zu der Turbine, insbesondere zu einer letzten Stufe der Turbine, angeordnet ist, um eine homogene Strömungsverteilung der Gasströmung über jedem Strömungskanal zu erreichen. Hierdurch kann die Gasströmung genutzt werden, um eine Dampferzeugung bzw. eine Überhitzung des im Wärmetauscher erzeugten Wasserdampfs effizienter zu gestalten und insbesondere ein höherer thermischer Wirkungsgrad durch Nutzung der Abgasenergie erzielt werden. Der Wärmetauscher kann dabei beispielsweise als Rohrbündelwärmetauscher bzw. Rohrbündelwärmeübertrager ausgebildet sein, wobei die Strömungskanäle das bzw. die Rohrbündel ausbilden.

Bei einer Ausführungsform sind die Strömungskanäle in einer Übertragungsebene parallel zueinander angeordnet, wobei die Strömungskanäle insbesondere gleichmäßig beabstandet zueinander angeordnet sind. Bei dieser Ausprägung kann die Gasströmung gleichzeitig mehrere Strömungskanäle insbesondere gleichmäßig umströmen, um einen homogene Wärmeübertragung zu unterstützen. Hierbei kann die Übertragungsebene horizontal oder in einem Winkel zu einer Längsachse und/ oder Querachse der Strömungsmaschine angeordnet sein. In einigen Ausführungsformen können die Strömungskanäle in mehreren parallel zueinander angeordneten Ebenen verlaufen sein, wobei die Ebenen parallel oder in einem Winkel zueinander und/ oder achssymmetrisch um eine Achse angeordnet sein können. Insbesondere sind die Ebenen senkrecht zu der wenigstens einen Übertragungsebene angeordnet.

Bei einer Ausführungsform weist der wenigstens eine Strömungskanal wenigstens zwei zueinander parallel angeordnete Abschnitte auf, welche in jeweils verschiedenen zueinander parallel angeordneten Übertragungsebenen verlaufen. Diese parallelen Abschnitte sind insbesondere gerade ausgebildet. Dabei sind die Abschnitte üblicherweise an ihren Enden miteinander verbunden, sodass das Wasser die Abschnitte des wenigstens einen Strömungskanals nacheinander, insbesondere mäandernd, durchströmen kann. Hierdurch kann das Wasser in zwei benachbarten Abschnitten in entgegengesetzten Richtungen geführt und von der Gasströmung umströmt werden, um eine Wärmeübertragung beispielsweise im Kreuzgegenstrom zwischen der Gasströmung und dem in dem wenigstens einen Strömungskanal strömenden Wasser zu ermöglichen. Hierdurch kann eine homogenere Strömungsverteilung der Gasströmung und somit ein gleichmäßigerer Wärmeübergang auf die Strömungskanäle erzielt werden.

Bei einer Ausführungsform ist der wenigstens eine Strömungskanal wenigstens abschnittsweise in einem Winkel, insbesondere senkrecht, von der Gasströmung umströmbar. Hierbei kann eine Strömungskonfiguration insbesondere eines Kreuzstromwärmetauschers vorgesehen werden, sodass der wenigstens eine Strömungskanal über seine Längserstreckung gleichmäßig von der Gasströmung umströmbar ist. Hierbei kann der wenigstens eine Strömungskanal beispielsweise in einem Winkel von etwa 90° bzw. in einem Bereich von etwa 70° bis 110° angeströmt bzw. umströmt werden. Hierzu kann der Wärmetauscher eingerichtet sein, die Gasströmung in einem Winkel von etwa 90° in den Bereich der Strömungskanäle zu führen und in etwa diesem Winkel über insbesondere sämtliche Abschnitte des Strömungskanals zu leiten.

Um eine im Wesentlichen senkrecht zu dem wenigstens einen Strömungskanal verlaufende Umströmung des wenigstens einen Strömungskanals mittels der Gasströmung zu erzielen, kann der Wärmetauscher eine Umlenkeinrichtung für den Gasstrom aufweisen. Hierbei kann mittels der Umlenkeinrichtung des Wärmetauschers und/ oder in dem Wärmetauschbereich eine Umlenkung der Gasströmung in Bezug auf die Strömungsrichtung bzw. der Hauptströmungsachse der Strömungsmaschine erzielt werden, um eine Wärmeübertragung insbesondere im Kreuzstrom bzw. Kreuzgegenstrom zwischen der Gasströmung und dem in dem wenigstens einen Strömungskanal strömenden Wasser zu ermöglichen. Hierdurch kann die Strömungsverteilung der Gasströmung relativ zu den Strömungskanälen annähernd gleichartig für jeden der Strömungskanäle ausfallen, um eine aerothermale Asymmetrie weiter zu vermeiden und dadurch bedingte Leistungsverluste zu reduzieren.

Bei einer Ausführungsform sind die Strömungskanäle achssymmetrisch um eine gemeinsame Achse, insbesondere eine Drehachse der Strömungsmaschine angeordnet. Hierbei können die Strömungskanäle gleichmäßig beabstandet zueinander oder in Clustern angeordnet sein und/ oder in einer beispielsweise ringförmigen Anordnung angeordnet sein. Hierbei kann der Wärmetauscher eingerichtet sein, die Strömungskanäle von einem inneren Durchmesser der ringförmigen Anordnung insbesondere in einer Richtung nach radial außen zu umströmen. Bei einer solchen Ausprägung kann die Gasströmung gleichzeitig mehrere Strömungskanäle insbesondere homogen bzw. gleichmäßig, und insbesondere in einem Winkel umströmen, um einen größeren Wärmeübergang zu erreichen und so eine größere Menge Wasserdampf oder einen Wasserdampf mit höherer Überhitzung erzeugen zu können.

Bei einer Ausführungsform schließen die Strömungskanäle einen Anstellwinkel mit der Strömungsrichtung der Strömungsmaschine ein. Der Anstellwinkel kann dabei insbesondere zwischen 0° und 45°, weiter insbesondere zwischen 5° und 35° und weiter insbesondere zwischen 15° und 30° betragen. Hierbei kann der Wärmetauscher eingerichtet sein, die Gasströmung unter einem Winkel zur Übertragungsebene, insbesondere senkrecht hierzu, über die Strömungskanäle zu leiten, insbesondere um die Strömungscharakteristik eines Kreuz- oder Kreuzgegenstromwärmetauschers bereitstellen zu können. Hierdurch kann beispielsweise eine bauliche Integration in die Strömungsmaschine und ein Zusammenwirken mit weiteren Komponenten in einem WET-Konzept, wie beispielsweise dem Kondensator, insbesondere durch die angepasste Strömungsführung der Gasströmung, verbessert werden.

Bei einer Ausführungsform weisen wenigstens zwei Abschnitte des wenigstens einen Strömungskanals unterschiedliche Innenquerschnitte auf. Unter einem Innenquerschnitt wird insbesondere eine Rohrinnenquerschnittsfläche eines Strömungskanals bzw. eines Abschnitts des Strömungskanals verstanden. Hierbei können beispielsweise wenigstens zwei Abschnitte in wenigstens zwei Übertragungsebenen angeordnet sein, wobei Abschnitte unterschiedlicher Übertragungsebenen unterschiedliche Innenquerschnitte aufweisen können. Dabei können Abschnitte, welche in Strömungsrichtung der Gasströmung stromaufwärts bzw. näher an der Turbine angeordnet sind, einen kleineren Durchmesser aufweisen, als Abschnitte, die in Strömungsrichtung der Gasströmung stromabwärts bzw. entfernter von der Turbine und/ oder näher an einer Zuführung des Wassers in den Strömungskanal angeordnet sind. Damit kann beispielsweise Wasser in flüssigem Zustand in Abschnitten des Strömungskanals mit kleineren Innenquerschnitten strömen und mit zunehmendem Verdampfungsgrad in Abschnitten mit größeren Innenquerschnitten, um einer Veränderung der Reynoldszahlen des bei der Verdampfung phasenwechselnden Wassers entlang des Strömungspfades entgegen zu wirken, wodurch ein Verhältnis von Wärmeübergang zu Druckverlusten verbessert werden kann.

Bei einer Ausführungsform sind wenigstens zwei Abschnitte der Strömungskanäle mittels einer Verbindungseinrichtung verbunden. Hierbei kann die Verbindungeinrichtung ausgebildet sein, zwei insbesondere parallele und/ oder benachbarte Abschnitte miteinander fluidisch und damit insbesondere ohne Beeinträchtigung des Strömungs- bzw. Innenquerschnitts zu verbinden. Beispielsweise kann die Verbindungseinrichtung als ein Krümmungsabschnitt, der integral oder als separate Komponente ausgebildet sein kann, als Manifold oder Ringverteiler ausgebildet sein. Hierdurch kann das einen Strömungskanal durchströmende Wasser in zwei benachbarten Abschnitten in gegengesetzten Richtungen (vor und zurück) strömen, wodurch insbesondere der Wärmetausch im Kreuzgegenstrom ermöglicht wird. Zudem kann durch eine Verbindung von parallelen Abschnitten eines Strömungskanals mittels einer oder mehrerer Verbindungseinrichtung(en) ermöglicht werden, sodass ein oder mehrere Abschnitte unterschiedliche Geometrien und/ oder verschiedene Materialien aufweisen können.

Bei einer Ausführungsform ist die Verbindungseinrichtung eingerichtet, Wasser aus einem Abschnitt eines Strömungskanals in wenigstens einen nächsten Abschnitt des Strömungskanals umzulenken. Hierbei können zwei parallele und/ oder benachbarte Abschnitte insbesondere wenigstens zweier Übertragungsebenen miteinander verbunden sein bzw. werden, wobei eine Verbindung beispielsweise in Form einer, insbesondere direkten, Rohr-zu-Rohr-Verbindung, insbesondere in Form eines oder mehrerer Rohrübergangsstück(e), Rohrsammler, Manifold(s) und/ oder Ringverteiler realisiert sein können.

Bei einer Ausführungsform unterscheidet sich eine Anzahl erster Abschnitte von einer Anzahl zweiter Abschnitte des Wärmetauschers. Hierdurch kann eine Strömungsführung des Wassers angepasst werden, insbesondere im Hinblick auf einen Phasenwechsel beim Verdampfen, sodass eine Wärmeübertragung über den gesamten Strömungsverlauf des Wassers günstig erfolgen kann. Bei einer derartigen Ausführungsform kann eine Verbindungseinrichtung eingerichtet sein, das Wasser aus Abschnitten einer in Strömungsrichtung des Wassers stromaufwärts angeordneten Übertragungsebene in einem Plenum zu sammeln und in Abschnitte einer in Strömungsrichtung des Wassers folgenden Übertragungsebene zu leiten bzw. zu verteilen. Hierdurch können unterschiedliche Anzahlen von Abschnitten in verschiedenen Übertragungsebenen durchströmbar verbunden werden und gleichzeitig eine günstige Strömung des Wassers gefördert werden.

Bei einer Ausführungsform weist der wenigstens eine Strömungskanal ein Strömungselement auf. Ein Strömungselement kann hierbei beispielsweise ein Einsatz bzw. Insert sein, welches in einem durchströmbaren Querschnitt des wenigstens einen Strömungskanals angeordnet sein kann. Dabei kann das Strömungselement als Verengung und/ oder Störstruktur ausgebildet sein und beispielsweise eingerichtet sein, den Querschnitt des Strömungskanals wenigstens abschnittsweise zu verringern, um strömungsmechanische Instabilitäten zu vermeiden oder zu reduzieren. In anderen Ausführungsformen kann das Strömungselement in einer Gitterstruktur ausgebildet sein, die insbesondere in einem Verdampfungsgebiet des Strömungskanals angeordnet sein kann. Durch eine solche Gitterstruktur können Turbulenzen erzeugt und eine Durchmischung des Wassers bzw. des Wasserdampfs erhöht werden. Hierdurch können beispielsweise in der Wasser(dampf)strömung vorliegende Tröpfchen an eine Wandung des Strömungskanals oder an einen mit der Wandung wärmeleitend verbundenen Teil des Strömungselements gebracht werden, wo sie ihnen so viel Wärmeenergie zugeführt wird, dass sie verdampfen können. Eine Leistung des Wärmetauschers kann hierdurch gesteigert werden.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung einer beispielhaften Strömungsmaschine für einen Flugantrieb gemäß der vorliegenden Offenbarung;
- Fig. 2: eine schematische Darstellung eines Ausführungsbeispiels eines Wärmetauschers einer beispielhaften Strömungsmaschine gemäß der vorliegenden Offenbarung;
- Fig. 3: eine schematische Schnittdarstellung eines Ausführungsbeispiels eines Wärmetauschers einer beispielhaften Strömungsmaschine gemäß der vorliegenden Offenbarung;
- Fig. 4a, 4b: schematische Ansichten eines ersten Ausführungsbeispiels eines Wärmetauschers einer beispielhaften Strömungsmaschine gemäß der vorliegenden Offenbarung;
- Fig. 5a, 5b: jeweils eine schematische Ansicht eines zweiten und eines dritten Ausführungsbeispiels eines Wärmetauschers einer beispielhaften Strömungsmaschine gemäß der vorliegenden Offenbarung;
- Fig. 6a, 6b: schematische Ansichten eines ersten Ausführungsbeispiels von Strömungskanälen eines Wärmetauschers einer beispielhaften Strömungsmaschine gemäß der vorliegenden Offenbarung;
- Fig. 7a - 7c: schematische Ansichten eines ersten Ausführungsbeispiels von Strömungskanälen eines Wärmetauschers einer beispielhaften Strömungsmaschine gemäß der vorliegenden Offenbarung; und
- Fig. 8a, 8b: jeweils eine schematische Schnittansicht eines ersten und eines zweiten Ausführungsbeispiels eines Strömungskanals mit einem Strömungselement eines Wärmetauschers einer beispielhaften Strömungsmaschine gemäß der vorliegenden Offenbarung.

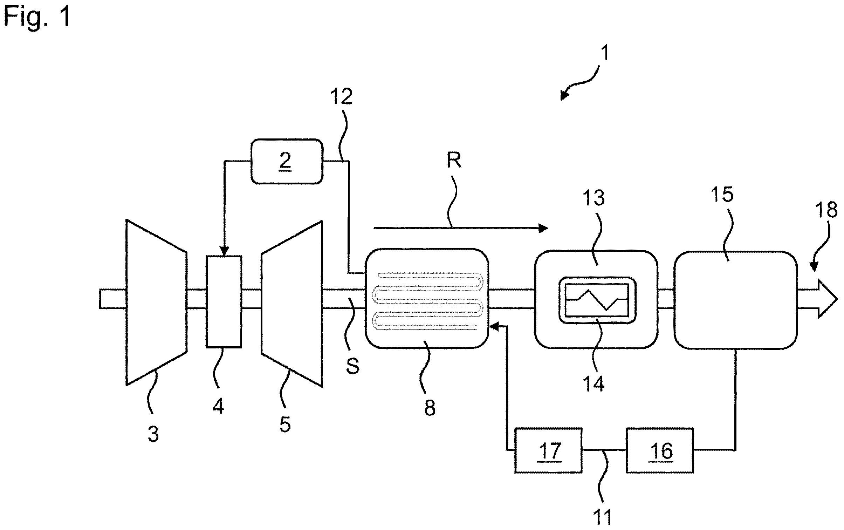

**Fig. 1** zeigt eine erfindungsgemäße Strömungsmaschine 1 für einen Flugantrieb in einer schematischen Darstellung.

Die Strömungsmaschine 1 ist beispielsweise als Mantelstromtriebwerk ausgebildet und weist einen Verdichter 3, einen Brennraum 4 und eine Turbine 5 auf, die von einer Gasströmung S in einer Strömungsrichtung R durchströmbar sind bzw. in einem Betrieb der Strömungsmaschine 1 von der Gasströmung S durchströmt werden. Der Turbine 5 in der Strömungsrichtung R nachgelagert weist die Strömungsmaschine 1 einen Wärmetauscher 8 auf, der eingerichtet ist, aus einem Wasser mittels einer Energie der Gasströmung S Wasserdampf zu erzeugen.

Dieser Wasserdampf kann über eine Dampfzuführung 12, insbesondere zusammen mit einem Brennstoff in die Gasströmung S zum Verbrennen im Brennraum 4 zugeführt werden. Die Dampfzuführung 12 kann eine Mischkammer 2 einer Brennstoffaufbereitungseinrichtung aufweisen, in welche Brennstoff eingebracht und dem dort eingebrachten Wasserdampf zugeführt werden kann, wobei der Brennstoff verdampfen kann. Aus dem Wasserdampf und dem Brennstoff kann somit ein Gemisch gebildet werden, welches dem Brennraum 4 der Strömungsmaschine 1 zugeführt werden kann. In manchen Ausführungsformen kann der Wasserdampf auch vor und/oder in dem Brennraum 4 der Gasströmung S zugeführt werden.

Bezogen auf eine mittels eines Pfeils illustrierte globale Strömungsrichtung R der Gasströmung S, welche im Wesentlichen parallel zu einer Drehachse der Strömungsmaschine 1 ausgerichtet ist, passiert die Gasströmung S zunächst den Verdichter 3, den Brennraum 4 und die Turbine 5. Die Gasströmung S kann von der Turbine 5 in den Wärmetauscher 8 strömen, welchem eine Kühleinrichtung 13 und eine Wasserabscheideeinrichtung 15 in Strömungsrichtung der Gasströmung S nachgelagert angeordnet sind.

Die Kühleinrichtung 13 kann einen zur Kühlung mit Umgebungsluft eingerichteten Kondensator 14 aufweisen, um ein Abscheiden eines in der Gasströmung S vorliegenden Wasserdampfs und/ oder Wassers zu ermöglichen. Der Kühleinrichtung 13 nachgelagert ist in dem vorliegenden Ausführungsbeispiel eine Wasserabscheideeinrichtung 15 angeordnet, die als Tropfenabscheider ausgebildet sein kann, um das Wasser zu sammeln. Die verbleibende Gasströmung S kann die Strömungsmaschine 1 über einen Auslass 18 verlassen und insbesondere an die Umgebung abgegeben werden.

Das abgeschiedene Wasser kann beispielsweise über ein optional vorhandenes Wasseraufbereitungssystem 16 in einen Wasserspeicher 17 geführt werden, wo es für eine weitere Verwendung zur Verfügung stehen kann. Mittels einer Zuführeinrichtung 11 kann das Wasser dem Wärmetauscher 8 bereitgestellt werden, um Wasserdampf zu erzeugen, der im Bereich des Brennraums 4 der Gasströmung S zugeführt werden kann.

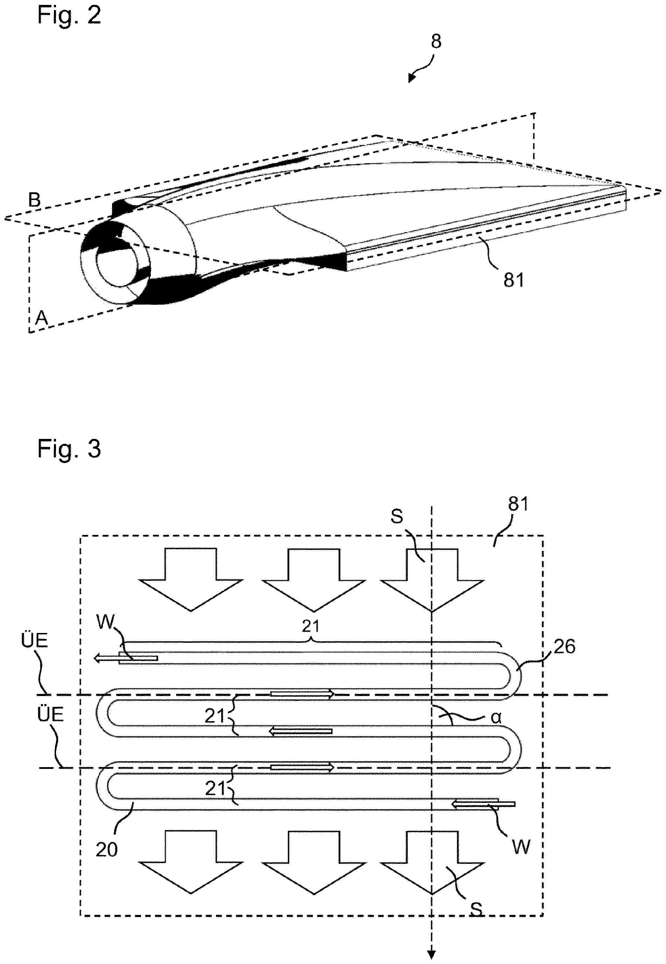

Ausführungsbeispiele des Wärmetauschers 8 der Strömungsmaschine 1 werden nachfolgend im Zusammenhang mit den Figuren 2 bis 8b näher beschrieben.

**Fig. 2** zeigt eine perspektivische Darstellung eines ersten Ausführungsbeispiels eines Wärmetauschers 8, wie er in einer Strömungsmaschine 1 der Fig. 1 vorgesehen sein kann.

Der beispielhafte Wärmetauscher 8 ist im Wesentlichen planar ausgebildet und weist einen sich in einer Ebene B erstreckenden Wärmetauschbereich 81 auf, in welchem wenigstens ein von Wasser durchströmbarer Strömungskanal 20 angeordnet ist und dort von der Gasströmung S umströmbar ist. Insbesondere kann der Wärmetauscher 8 auch mehrere Wärmetauschbereiche 81 aufweisen.

**Fig. 3** zeigt eine schematische Darstellung einer Schnittebene A aus Fig. 2 eines Ausführungsbeispiels eines Wärmetauschbereichs 81 eines Wärmetauschers 8, wie er in einer Strömungsmaschine 1 der Fig. 1 bzw. einem Wärmetauscher 8 der Fig. 2 ausgebildet sein kann.

In dem Wärmetauschbereich 81 verläuft ein Strömungskanal 20 im Wesentlichen parallel zur planaren Erstreckung des Wärmetauschbereichs 81 sowie zur Strömungsrichtung R der Strömungsmaschine 1 und ist von Wasser W durchströmbar. Dabei weist der Strömungskanal 20 wenigstens zwei, hier fünf, zueinander parallel angeordnete Abschnitte 21 auf, die in mehreren parallelen Übertragungsebenen ÜE verlaufen (beispielhaft sind nur zwei Übertragungsebene ÜE dargestellt). Die Übertragungsebenen ÜE sind bei der dargestellten Ausführung ebenfalls parallel zur planaren Erstreckung des Wärmetauschbereichs 81 des Wärmetauschers 8 angeordnet. Dabei können die Abschnitte 21 mittels einer Verbindungseinrichtung 26 in einer eins zu eins Anordnung zur Fluidführung verbunden sein.

Der Wärmetauscher 8 und/ oder der Wärmetauschbereich 81 sind insbesondere derart ausgebildet, dass der wenigstens eine Strömungskanal 20 von der Gasströmung S in einem Winkel α von der Gasströmung S umströmbar ist. Hierdurch kann sich zwischen dem Wasser W und der Gasströmung S eine Wärmeübertragung im Kreuzgegenstrom ergeben. Dabei strömen das Wasser W und die Gasströmung S bei der dargestellten Ausführung im Wesentlichen in einem Winkel α von etwa 90° zu einander.

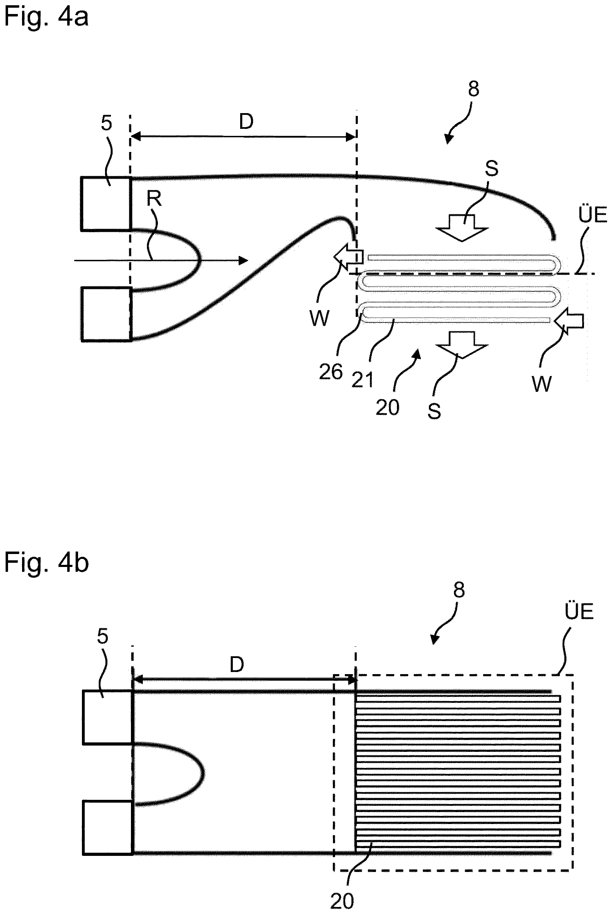

**Fig. 4a und 4b** zeigen schematische Ansichten des ersten Ausführungsbeispiels eines Wärmetauschers 8 aus Fig. 2.

In Fig. 4a ist eine schematische Schnittdarstellung in einer Ebene A des Wärmetauschers 8 aus Fig. 2 dargestellt. Der Wärmetauscher 8 weist wenigstens zwei sich in einer Übertragungsebene ÜE erstreckende Strömungskanäle 20 auf, die von einem Wasser W im Wesentlichen parallel zu der Strömungsrichtung R der Strömungsmaschine 1 durchströmbar sind. Aufgrund der senkrecht zur Übertragungsebene ÜE angeordneten Schnittebene ist nur ein Strömungskanal 20 dargestellt. Jeder Strömungskanal 20 jeder Übertragungsebene ÜE ist dabei in der Strömungsrichtung R der Strömungsmaschine 1 äquidistant zur Turbine 5 angeordnet. Äquidistant bedeutet hierbei insbesondere, dass ein der Turbine 5 nächstgelegener Punkt jedes Strömungskanals 20 einer Übertragungsebene ÜE den gleichen Abstand D zur Turbine 5 aufweist bzw. auf derselben Axialposition relativ zur Turbine 5 und/ oder relativ zu der Strömungsmaschine 1 angeordnet ist. Hierbei können alle Abschnitte des jeweiligen Strömungskanals 20 äquidistant zur Turbine 5 angeordnet sein. Sind die Abschnitte 21 des Strömungskanals 20 mittels wenigstens einer Verbindungseinrichtung 26 miteinander verbunden, können diese Verbindungseinrichtungen 26 äquidistant zur Turbine 5 angeordnet sein.

Fig. 4b zeigt eine schematische Schnittdarstellung in einer Ebene B des Wärmetauschers 8 aus Fig. 2.

Wie erkennbar ist, weist der Wärmetauscher 8 in einer Übertragungsebene ÜE mehrere zueinander parallel angeordnete, von dem Wasser W durchströmbare Strömungskanäle 20 auf, die jeweils mehrere in parallelen Übertragungsebenen ÜE angeordnete Abschnitte 21 aufweisen können. Die Gasströmung S kann die Strömungskanäle 20 in einer Richtung senkrecht zur Zeichnungsebene umströmen, um Energie an das darin fließende Wasser abzugeben. Dabei weisen alle Strömungskanäle 20 den gleichen Abstand D zur Turbine 5 auf, sodass alle Strömungskanäle 20 insbesondere gleichmäßig von der Gasströmung S umströmt werden können, um Wasserdampf zu erzeugen.

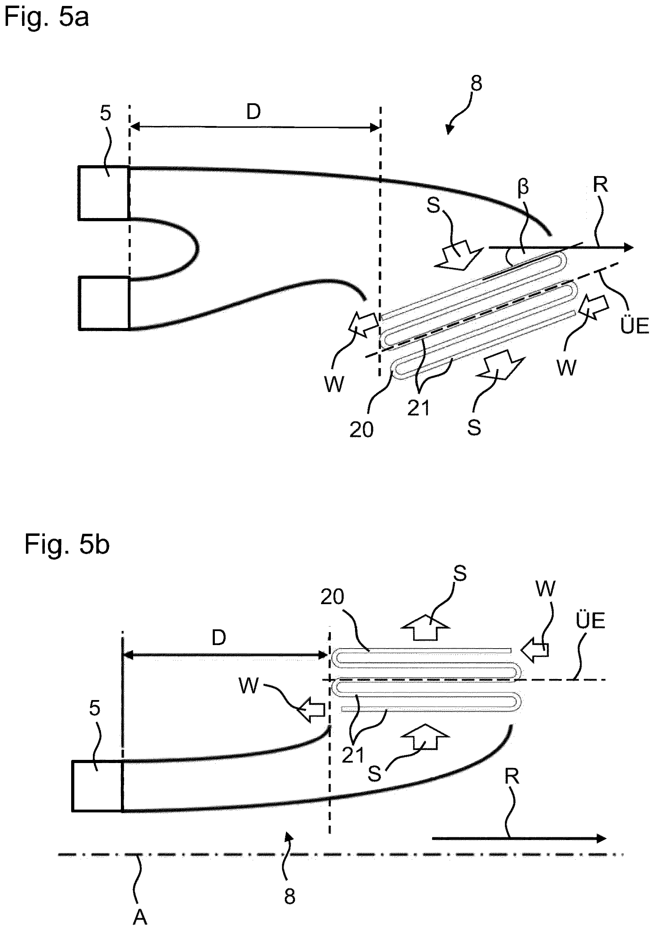

**Fig. 5a und 5b** zeigen schematische Ansichten jeweils eines weiteren Ausführungsbeispiels eines Wärmetauschers 8 einer Strömungsmaschine 1 der Fig. 1.

In Fig. 5a ist eine schematische Schnittdarstellung in einer Ebene durch eine Längsachse (entsprechend der Ebene Ader Fig. 2) eines zweiten Ausführungsbeispiels eines Wärmetauschers 8 dargestellt. Der Wärmetauscher 8 weist einen Wärmetauschbereich 81 mit wenigstens einen Strömungskanal 20 auf, der von Wasser W im Wesentlichen parallel zu der Strömungsrichtung R der Strömungsmaschine 1 durchströmbar ist. Jeder Strömungskanal 20 erstreckt sich dabei in wenigstens einer Übertragungsebene ÜE und ist mit anderen sich in dieser Übertragungsebene ÜE erstreckenden Strömungskanälen 20 in der Strömungsrichtung R der Strömungsmaschine 1 äquidistant, also im gleichen Abstand D zur Turbine 5 angeordnet und schließt einen Anstellwinkel β mit der Strömungsrichtung R der Strömungsmaschine 1 ein. Ein solcher Anstellwinkel β kann beispielsweise zwischen 15° und 30° betragen. Hierdurch kann eine Außengeometrie des Wärmetauschers 8 beispielsweise an einen zur Verfügung stehenden Bauraum angepasst ausgelegt werden. Bei einer Ausführung können auch alle Abschnitte des jeweiligen Strömungskanals 20 äquidistant zur Turbine 5 angeordnet sein oder die Abschnitte der sich jeweils in unterschiedlichen Übertragungsebenen ÜE erstreckenden Abschnitte 21 eines Strömungskanals 20 können, wie in Fig. 5a gezeigt, pro Übertragungsebene ÜE unterschiedliche Abstände D zu der Turbine 5 aufweisen. Sind die Abschnitte 21 des Strömungskanals 20 mittels wenigstens einer Verbindungseinrichtung 26 miteinander verbunden, sind diese Verbindungseinrichtungen 26 insbesondere abhängig von der Ausführungsform nächstliegend zur Turbine 5 angeordnet und sind damit entsprechend äquidistant oder in unterschiedlichen Abständen D zur Turbine 5 angeordnet.

In Fig. 5b ist eine schematische Schnittdarstellung in einer Ebene durch eine Längsachse eines dritten Ausführungsbeispiels eines rotationssymmetrisch ausgebildeten Wärmetauschers 8 dargestellt. Der Wärmetauscher 8 weist achssymmetrisch um eine gemeinsame Achse A angeordnete Strömungskanäle 20 auf, die von Wasser W im Wesentlichen parallel zu der Strömungsrichtung R der Strömungsmaschine 1 durchströmbar sind. Jeder Strömungskanal 20 insbesondere je einer Übertragungsebene ÜE ist dabei in der Strömungsrichtung R der Strömungsmaschine 1 äquidistant zur Turbine 5 angeordnet.

Der beispielhafte in Fig. 5b dargestellte Wärmetauscher 8 ist insbesondere derart ausgebildet, dass die Strömungskanäle 20 in einer ringförmigen bzw. hohlzylindrischen Anordnung angeordnet sind und von einem inneren Umfang der ringförmigen bzw. hohlzylindrischen Anordnung, insbesondere in einer Richtung nach radial außen von der Gasströmung S umströmbar sind. Hierdurch kann sich zwischen dem Wasser W und der Gasströmung S eine Wärmeübertragung im Kreuzgegenstrom ergeben.

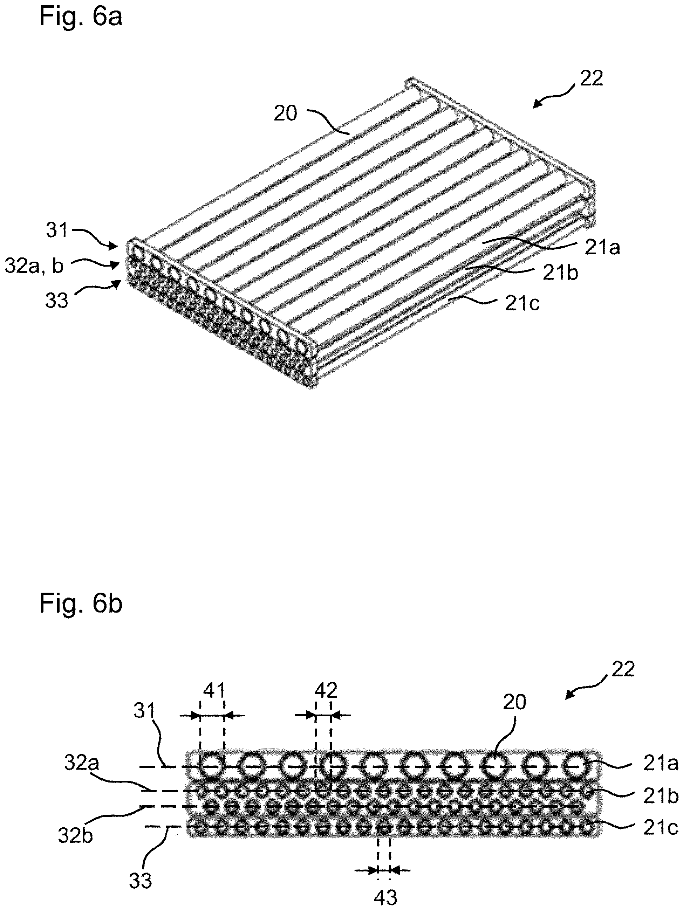

Die **Fig. 6a und 6b** zeigen jeweils Ansichten von Strömungskanälen 20 in einer parallelen Anordnung, insbesondere einer Strömungskanalanordnung 22 eines Wärmetauschers in Form eines Rohrbündels.

Fig. 6a zeigt eine perspektivische Darstellung eines ersten Ausführungsbeispiels einer Strömungskanalanordnung 22. Die Strömungskanäle 20 weisen dabei drei zueinander parallel angeordnete Abschnitte 21a, 21b, 21c auf, die jeweils parallel zueinander in einer Übertragungsebene 31, 32a, 32b, 33 angeordnet sind. Dabei weisen die Abschnitte 21a, 21b, 21c der jeweiligen Übertragungsebene 31, 32a, 32b, 33 unterschiedliche Anzahlen und Innenquerschnitte auf. Die Übertragungsebenen 31, 32a, 32b, 33 sind hierbei insbesondere nacheinander von der Gasströmung S umströmbar. Hierdurch kann, insbesondere bei einer Umströmung der Strömungskanäle 20 im Kreuzstrom oder im Kreuzgegenstrom, eine Anpassung der Gesamtinnenquerschnittsfläche (Summe aller Strömungskanalinnenquerschnittsflächen) der Strömungskanäle 20 über ihren Verlauf erfolgen. Hierdurch können über den Verlauf der Strömungskanäle 20 beispielsweise Reynoldszahlen im verdampfenden, also phasenwechselnden Wasser W konstant gehalten werden.

Fig. 6b zeigt eine Vorderansicht der Strömungskanalanordnung 22 aus Fig 6a. Bei der dargestellten Dimensionierung der Abschnitte 21a, 21b, 21c kann eine Anpassung der Gesamtinnenquerschnittsfläche in Abhängigkeit der bei Phasenwandel veränderlichen Stoffgrößen, insbesondere einer Dichte, eines Volumens und einer Strömungsgeschwindigkeit des Wassers, ermöglicht werden. Hierbei kann die Gesamtinnenquerschnittsfläche beispielsweise über einen Innenquerschnitt eines einzelnen Abschnitts 21a, 21b, 21c, einer Anzahl von Abschnitten 21a, 21b, 21c oder eine Kombination von beiden diesen Möglichkeiten angepasst werden.

Beispielhaft weisen die Abschnitte 21a und 21b der Übertragungsebenen 31 und 32 unterschiedliche Querschnitte 41 und 42 auf und die Anzahl der ersten Abschnitte 21a unterscheidet sich von einer Anzahl der zweiten Abschnitte 21b. Die Abschnitte 21b und 21c der Anordnungsebenen 32a,b und 33 weisen gleiche Querschnitte 42 und 43 auf und die Anzahl der zweiten Abschnitte 21b unterscheidet sich von einer Anzahl der dritten Abschnitte 21c. Durch eine derart optimierte Auslegung der Querschnitte 41, 42, 43 und Anzahlen verschiedener Abschnitte 21 bzw. verschiedener Übertragungsebenen 31, 32, 33 kann eine Leistungsfähigkeit des Wärmetauschers 8 verbessert werden.

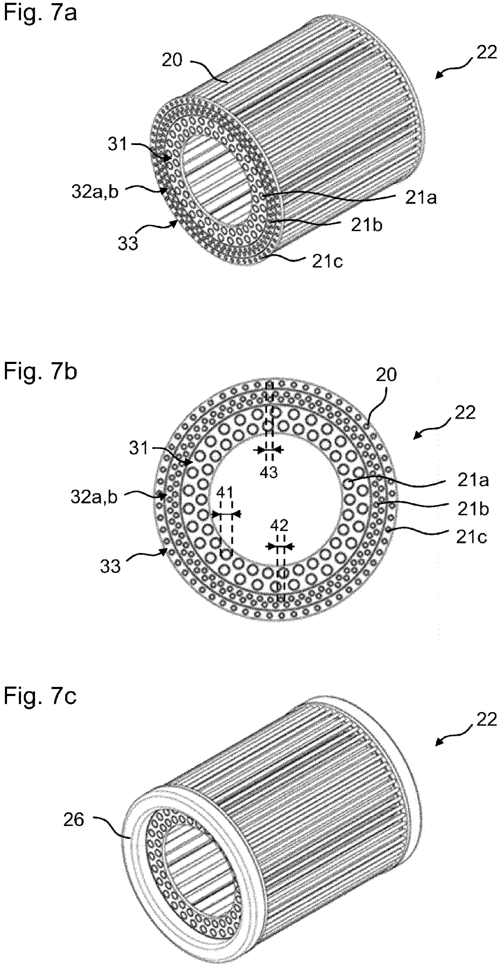

Die **Fig. 7a bis 7c** zeigen jeweils Ansichten von Strömungskanälen 20 in einer achssymmetrischen Anordnung 22.

Fig. 7a zeigt eine perspektivische Darstellung eines zweiten Ausführungsbeispiels einer Strömungskanalanordnung 22. Die Strömungskanäle 20 weisen dabei drei zueinander parallel angeordnete Abschnitte 21a, 21b, 21c auf, die jeweils in konzentrischen Übertragungsebenen 31, 32a,b, 33 angeordnet sind. Dabei weisen die Abschnitte 21a, 21b, 21c der jeweiligen Ebene 31, 32a,b, 33 unterschiedliche Anzahlen und Innenquerschnitte auf.

Fig. 7b zeigt eine Vorderansicht der Strömungskanalanordnung 22 aus Fig 7a. Beispielhaft weisen die Abschnitte 21a und 21b der Anordnungsebenen 31 und 32a, 32b unterschiedliche Querschnitte 41 und 42 auf und die Anzahl der ersten Abschnitte 21a unterscheidet sich von einer Anzahl der zweiten Abschnitte 21b. Die Abschnitte 21b und 21c der Anordnungsebenen 32 und 33 weisen gleiche Querschnitte 42 und 43 auf und die Anzahl der zweiten Abschnitte 21b unterscheidet sich von einer Anzahl der dritten Abschnitte 21c. Durch eine derartige Auslegung der Querschnitte 41, 42, 43 und der Anzahl verschiedener Abschnitte 21 kann eine Wärmeübertragung in einem Wärmetauscher 8 für eine achssymmetrische Umströmung der Strömungskanäle 20, insbesondere in einer Kreuzgegenstromkonfiguration, verbessert werden.

Fig. 7c zeigt die perspektivische Darstellung des zweiten Ausführungsbeispiels einer Strömungskanalanordnung 22 aus Fig. 7a, wobei die Abschnitte 21c und die Abschnitte 21b der Strömungskanäle 20 mittels einer Verbindungseinrichtung 26 verbunden sind. Die Verbindungseinrichtung 26 ist dabei eingerichtet, Wasser W aus den Abschnitten 21b der Strömungskanäle 20 in die nächsten Abschnitte 21c der Strömungskanäle 20 umzulenken. In dem vorliegenden Ausführungsbeispiel ist die Verbindungseinrichtung 26 eingerichtet, Wasser W aus den Abschnitten 21b der Anordnungsebene 32 in einem Plenum zu sammeln und zu den Abschnitten 21c der Anordnungsebene 32 zu leiten. Hierdurch kann das Wasser W trotz der unterschiedlichen Anzahl an Abschnitten 21b und 21c umgeleitet werden.

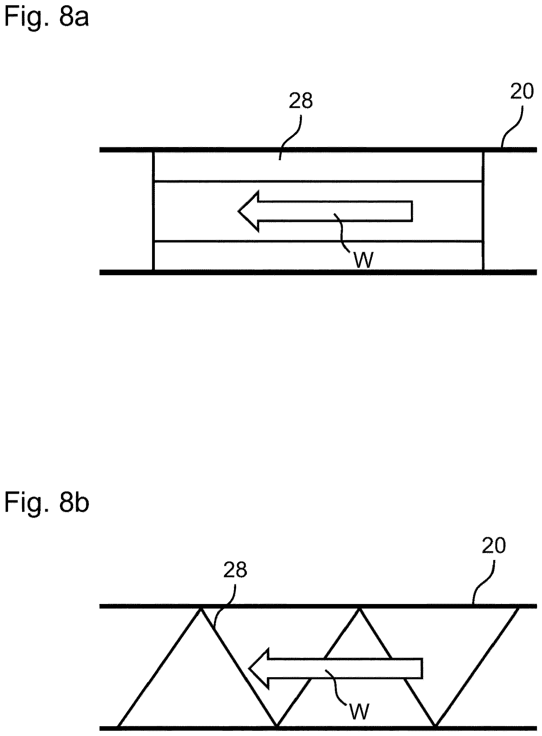

Die **Fig. 8a und 8b** zeigen jeweils Schnittansichten von Strömungskanälen 20, die ein Strömungselement 28 aufweisen.

In der Darstellung der Fig. 8a ist ein erstes Ausführungsbeispiel eines Strömungselements 28 in Form eines Einsatzes dargestellt, welcher in dem von dem Wasser W durchströmbaren Querschnitt des Strömungskanals 20 angeordnet ist. Dieses Strömungselement 28 ist eingerichtet, den Querschnitt des Strömungskanals 20 wenigstens abschnittsweise zu verringern, um mithilfe veränderter Oberflächenstrukturen bzw. der Strömungsführung die Wärmeübertragung von den Kanalwänden zum Wasser zu verbessern.

In der Darstellung der Fig. 8b ist ein zweites Ausführungsbeispiel eines Strömungselements 28 in Form einer Gitterstruktur ausgebildet und in dem durchströmbaren Querschnitt des Strömungskanals 20, insbesondere in einem Verdampfungsgebiet des Strömungskanals 20, angeordnet. Durch eine solche Gitterstruktur 28 können Turbulenzen erzeugt und insbesondere in einer Wasser(dampf)strömung vorliegende Tröpfchen an eine Wandung des Strömungskanals oder an einen mit der Wandung wärmeleitend verbundenen Teil des Strömungselements 28 gebracht werden, um die Wärmezufuhr zu verbessern.

### BEZUGSZEICHENLISTE

- 1: Strömungsmaschine
- 2: Mischkammer
- 3: Verdichter
- 4: Brennkammer
- 5: Turbine
- 8: Wärmetauscher
- 11: Zuführeinrichtung
- 12: Dampfzuführung
- 13: Kühleinrichtung
- 14: Kondensator
- 15: Wasserabscheideeinrichtung
- 16: Wasseraufbereitungssystem
- 17: Wasserspeicher
- 18: Auslass
- 20: Strömungskanal
- 21: Abschnitt eines Strömungskanals
- 22: Strömungskanalanordnung
- 26: Verbindungseinrichtung
- 28: Strömungselement
- 31, 32a, 32b, 33: Übertragungsebenen
- 41, 42, 43: Querschnitt eines Abschnitts eines Strömungskanals
- 81: Wärmetauschbereich
- A: Achse
- D: Abstand
- S: Gasströmung
- R: Strömungsrichtung der Strömungsmaschine
- ÜE: Übertragungsebene
- α: Winkel zwischen Strömungskanal und Gasströmung
- β: Anstellwinkel

## Patentansprüche

1. Strömungsmaschine (1) für einen Flugantrieb mit einem von einer Gasströmung (6) in einer Strömungsrichtung (R) der Strömungsmaschine (1) durchströmten Verdichter (3), Brennraum (4), Turbine (5) und einem der Turbine (5) nachgelagerten Wärmetauscher (8), wobei der Wärmetauscher (8) eingerichtet ist, aus einem Wasser (W) mittels einer Energie der Gasströmung (6) einen Wasserdampf zu erzeugen, welcher der Gasströmung (6) zum Verbrennen im Brennraum (4) mit Brennstoff zuführbar ist, wobei der Wärmetauscher (8) wenigstens zwei sich im Wesentlichen in wenigstens einer Übertragungsebene (ÜE) erstreckende Strömungskanäle (20) aufweist, die von dem Wasser (W) im Wesentlichen parallel zu der Strömungsrichtung (R) der Strömungsmaschine (1) durchströmbar sind, wobei jeder Strömungskanal (20) in der wenigstens einen Übertragungsebene (ÜE) in der Strömungsrichtung (R) der Strömungsmaschine (1) äquidistant zur Turbine (5) angeordnet ist.

2. Strömungsmaschine (1) nach Anspruch 1, wobei die Strömungskanäle (20) parallel zueinander in einer Ebene angeordnet sind.

3. Strömungsmaschine (1) nach wenigstens einem der vorhergehenden Ansprüche, wobei der wenigstens eine Strömungskanal (20) wenigstens zwei zueinander parallel angeordnete Abschnitte (21) aufweist, welche in verschiedenen zueinander parallel angeordneten Übertragungsebenen (ÜE) verlaufen.

4. Strömungsmaschine (1) nach wenigstens einem der vorhergehenden Ansprüche, wobei der wenigstens eine Strömungskanal (20) wenigstens abschnittsweise in einem Winkel (α) von der Gasströmung (S) umströmbar ist.

5. Strömungsmaschine (1) nach wenigstens einem der vorhergehenden Ansprüche, wobei die Strömungskanäle (20) achssymmetrisch um eine gemeinsame Achse (A) angeordnet sind.

6. Strömungsmaschine (1) nach wenigstens einem der vorhergehenden Ansprüche, wobei die Strömungskanäle (20) einen Anstellwinkel (β) mit der Strömungsrichtung (R) der Strömungsmaschine (1) einschließen.

7. Strömungsmaschine (1) nach wenigstens einem der Ansprüche 3 bis 6, wobei wenigstens zwei Abschnitte (21) des wenigstens einen Strömungskanals (21) unterschiedliche Innenquerschnitte aufweisen.

8. Strömungsmaschine (1) nach wenigstens einem der Ansprüche 3 bis 7, wobei wenigstens zwei Abschnitte (21) der Strömungskanäle (20) mittels einer Verbindungseinrichtung (26) verbunden sind.

9. Strömungsmaschine (1) nach dem vorhergehenden Anspruch, wobei die Verbindungseinrichtung (26) eingerichtet ist, Wasser aus einem Abschnitt (21) eines Strömungskanals (20) in wenigstens einen nächsten Abschnitt (21) wenigstens eines Strömungskanals (20) umzulenken.

10. Strömungsmaschine (1) nach wenigstens einem der Ansprüche 3 bis 9, wobei eine Anzahl erster Abschnitte (21) sich von einer Anzahl zweiter Abschnitte (21) des Wärmetauschers (8) unterscheidet.

11. Strömungsmaschine (1) nach wenigstens einem der vorhergehenden Ansprüche, wobei der wenigstens eine Strömungskanal (20) ein Strömungselement (28) aufweist.
